# EUROPÄISCHE PATENTANMELDUNG

(11) **EP 3 995 332 A1**
(43) Veröffentlichungstag der Anmeldung: **11.05.2022**
(21) Anmeldenummer: 21204988.6
(22) Anmeldetag: 27.10.2021
(51) Int. Cl.: B60H 1/00, B60H 1/32

(54) **AUFDACHKLIMAANLAGE FÜR FAHRZEUGE**

(30) Priorität: 09.11.2020 DE 102020214025
(71) Anmelder: MAHLE International GmbH, 70376 Stuttgart (DE)
(72) Erfinder: ARGENTO, Alexander, 67071 Ludwigshafen (DE); HIPP, Dr. Christoph, 70192 Stuttgart (DE); SEHGAL, Deepak, 70437 Stuttgart (DE); WIESTNER, Armin, 71397 Leutenbach (DE)
(74) Vertreter: BRP Renaud & Partner mbB Rechtsanwälte Patentanwälte Steuerberater

(57) **Zusammenfassung**

Die vorliegende Erfindung betrifft eine Aufdachklimaanlage (1) für Fahrzeuge, mit einer Klimatisiereinrichtung (2) zum Klimatisieren, mit einem bezüglich der Klimatisiereinrichtung (2) separat gestalteten Tragrahmen (3) zum Fixieren der Klimatisiereinrichtung (2) an einem Fahrzeugdach. Der Tragrahmen (3) weist seinerseits einen separaten Hauptrahmen (4) sowie mindestens einen separaten Zusatzrahmen (5) auf, wobei der Hauptrahmen (4) eine erste Fixiereinrichtung (6) zum berührenden Anordnen eines Zusatzrahmens (5) aufweist. Wesentlich für die Erfindung ist, dass jeder Zusatzrahmen (5) eine zweite Fixiereinrichtung (7) zum berührenden Anordnen eines weiteren Zusatzrahmens (5) aufweist, und dass jeder Zusatzrahmen (5) eine Gegenfixiereinrichtung (8) zum berührenden Anordnen des jeweiligen Zusatzrahmens (5) am Hauptrahmen (4) oder an einem weiteren Zusatzrahmen (5) aufweist.

## Beschreibung

Die Erfindung betrifft eine Aufdachklimaanlage für Fahrzeuge nach dem Oberbegriff des Anspruchs 1.

Aufdachklimaanlagen für Fahrzeuge kommen in der Regel bei Straßen- oder Schienenfahrzeugen zum Einsatz. Sie werden dort vorzugsweise zum Kühlen eines Fahrzeuginnenraums eingesetzt.

In der DE 10 2015 211 594 A1 ist eine Aufdachklimaanlage zur Montage auf einem Fahrzeugdach eines Fahrzeugs beschrieben, die dort zum Klimatisieren eines Innenraums des Fahrzeugs eingesetzt ist. Die Aufdachklimaanlage weist unter anderem einen Rahmen zur ihrer Befestigung am Fahrzeugdach und eine Abdeckhaube auf. An den Rahmen kann ein Zusatzrahmen angebaut werden. Nachteilig hieran ist, dass an den Rahmen lediglich ein einziger Zusatzrahmen anbaubar ist, was in konstruktiver Hinsicht relativ wenig Spielraum für Veränderungen lässt.

Die Aufgabe der Erfindung liegt daher darin, eine verbesserte oder zumindest eine andere Ausführungsform einer Aufdachklimaanlage anzugeben. Insbesondere soll versucht werden, die konstruktive Flexibilität des Rahmens und des Zusatzrahmens zu steigern.

Bei der vorliegenden Erfindung wird diese Aufgabe insbesondere durch den Gegenstand des unabhängigen Anspruchs gelöst. Vorteilhafte Ausführungsformen sind Gegenstand der abhängigen Ansprüche und der Beschreibung.

Der Grundgedanke der Erfindung liegt darin, die seither bekannten Rahmen und Zusatzrahmen mit mehreren koppelbaren Anschlussgeometrien auszurüsten, um am Rahmen und/oder am Zusatzrahmen weitere Zusatzrahmen anbringen zu können. Hierdurch wird eine konstruktive Flexibilität, insbesondere eine Modularität, geschaffen, die eine preiswerte und schnelle Adaption der Aufdachklimaanlage an unterschiedliche Ausbaustufen und Ausführungsformen einer Klimatisiereinrichtung der Aufdachklimaanlage erlaubt.

Hierzu ist nach der Erfindung vorgesehen, eine Aufdachklimaanlage für Fahrzeuge bereitzustellen, die mit einer Klimatisiereinrichtung zum Klimatisieren ausgerüstet ist. Beispielsweise kann mittels der Klimatisiereinrichtung ein Fahrzeuginnenraum des Fahrzeugs hinsichtlich der Lufttemperatur und/oder der Luftfeuchtigkeit oder anderen Komfortgrößen nach Insassenvorgaben konditioniert werden. Ferner ist ein bezüglich der Klimatisiereinrichtung separat gestalteter Tragrahmen zum Tragen und Fixieren der Klimatisiereinrichtung an einem Fahrzeugdach des Fahrzeugs vorgesehen. Der Tragrahmen weist seinerseits einen separaten Hauptrahmen sowie mindestens einen separaten Zusatzrahmen auf. Das kann bedeuten, dass der Hauptrahmen und die Zusatzrahmen jeweils als eigenständige Baueinheiten realisiert sind. Im zusammengebauten Zustand des Tragrahmens sind der Hauptrahmen und die jeweiligen Zusatzrahmen berührend aneinander angeordnet. Um einen Zusatzrahmen am Hauptrahmen berührend anordnen zu können, weist der Hauptrahmen eine erste Fixiereinrichtung auf, an der ein Zusatzrahmen berührend angeordnet und fixiert werden kann, es kann sich hierbei um eine sogenannte erste Anschlussgeometrie handeln. Wesentlich für die Erfindung ist die innovative Erkenntnis, jeden Zusatzrahmen der Aufdachklimaanlage zum einen mit einer zweiten Fixiereinrichtung auszustatten, welche zum berührenden Anordnen und Fixieren eines weiteren Zusatzrahmens dient, zweckmäßigerweise handelt es sich hierbei um eine zweite Anschlussgeometrie, und zum anderen jeden Zusatzrahmen der Aufdachklimaanlage mit einer Gegenfixiereinrichtung auszustatten, welche zum berührenden Anordnen und Fixieren des jeweiligen Zusatzrahmens am Hauptrahmen oder an einem weiteren Zusatzrahmen dient, beispielsweise handelt es sich um eine Gegen-Anschlussgeometrie. Durch die Realisierung von Fixiereinrichtungen und Gegenfixiereinrichtungen an den Zusatzrahmen können die Zusatzrahmen sowohl berührend aneinander als auch berührend am Hauptrahmen angeordnet werden. Das hat den Vorteil, dass am Hauptrahmen oder an einem Zusatzrahmen weitere Zusatzrahmen, insbesondere in beliebiger Anzahl, angebracht werden können, so dass die Aufdachklimaanlage in konstruktiver Hinsicht relativ flexibel an unterschiedliche Ausbaustufen und Ausführungsformen der Klimatisiereinrichtung angepasst werden kann.

Zweckmäßigerweise können die erste Fixiereinrichtung und die zweiten Fixiereinrichtungen jeweils durch Fixier-Gleichteile gebildet sein. Alternativ oder zusätzlich können die Gegenfixiereinrichtungen jeweils durch Gegenfixier-Gleichteile gebildet sein. D.h. die erste Fixiereinrichtung und die zweiten Fixiereinrichtungen können konstruktiv identisch zueinander ausgebildet sein, also von identischer äußerer Form und/oder von identischem Material sein. Das hat den vorteilhaften Effekt, dass sie jeweils identische oder zumindest gleichartige Funktionen erfüllen. Durch die Ausbildung der ersten Fixiereinrichtung und der zweiten Fixiereinrichtungen als Fixier-Gleichteile lässt sich die Aufdachklimaanlage konstruktiv einfache und ferner relativ kostengünstig herstellen. Ferner können auch die Gegenfixiereinrichtungen identisch zueinander ausgebildet sein, also von identischer äußerer Form und/oder von identischem Material sein. Das hat den Effekt, dass sie identische oder zumindest gleichartige Funktionen erfüllen. Durch die Ausbildung der Gegenfixiereinrichtungen als Gegenfixier-Gleichteile lässt sich die Aufdachklimaanlage konstruktiv noch einfacher und ferner noch kostengünstiger herstellen.

Weiter zweckmäßigerweise sind die erste Fixiereinrichtung und die zweiten Fixiereinrichtungen jeweils komplementär zu den Gegenfixiereinrichtungen gestaltet. D.h. insbesondere, dass die erste Fixiereinrichtung und die zweiten Fixiereinrichtungen in konstruktiv und funktionell ergänzender Weise zu den Gegenfixiereinrichtungen ausgeführt sind. Dadurch wird erreicht, dass die jeweiligen Zusatzrahmen in beliebiger Zahl und in einer Reihenachse berührend aneinanderreihbar und am Hauptrahmen fixierbar sind.

Zweckmäßigerweise wirken die erste Fixiereinrichtung und eine Gegenfixiereinrichtung und/oder eine weiterer Gegenfixiereinrichtung und eine zweite Fixiereinrichtung zusammen, um die erwähnte Anordnung und Fixierung von Hauptrahmen und Zusatzrahmen zu erreichen. Ferner kann die erste Fixiereinrichtung stoffschlüssig und/oder formschlüssig und/oder kraftschlüssig mit einer Gegenfixiereinrichtung berührend zusammenwirken. Das hat die vorteilhafte Wirkung, dass der Hauptrahmen an einem Zusatzrahmen, insbesondere lösbar, fixierbar ist.

Um die Zusatzrahmen aneinander und/oder am Hauptrahmen, insbesondere lösbar, zu fixieren, ist vorgesehen, dass zweckmäßigerweise mindestens eine zweite Fixiereinrichtung stoffschlüssig und/oder formschlüssig und/oder kraftschlüssig mit einer Gegenfixiereinrichtung berührend zusammenwirkt.

Zweckmäßigerweise kann die erste Fixiereinrichtung an einer Gegenfixiereinrichtung durch stecken oder schrauben fixiert sein. Alternativ oder zusätzlich kann man sich vorstellen, mindestens eine zweite Fixiereinrichtung an einer Gegenfixiereinrichtung durch stecken oder schrauben zu fixieren. Dadurch kann der Tragrahmen im Rahmen einer Montage flexibel und zügig montiert werden.

Weiter zweckmäßigerweise sind die erste Fixiereinrichtung und jede zweite Fixiereinrichtung jeweils durch eine bettartige Steckeraufnahme gebildet. Jede Gegenfixiereinrichtung kann jeweils durch einen stegartigen Stecker gebildet sein. Im zusammengebauten Zustand des Tragrahmens kann dadurch mindestens ein Stecker eines Zusatzrahmens in eine Steckeraufnahme des Hauptrahmens berührend eingesteckt werden. Ferner kann mindestens ein Stecker eines weiteren Zusatzrahmens in eine Steckeraufnahme des am Hauptrahmen angeordneten Zusatzrahmens berührend eingesteckt werden. Dadurch ist ein Stecksystem realisiert, dass die Montage vereinfacht.

Zweckmäßigerweise können die erste Fixiereinrichtung und jede zweite Fixiereinrichtung jeweils durch eine Schraubenaufnahme gebildet sein. Die Gegenfixiereinrichtungen können jeweils durch eine Gegenschraubenaufnahme gebildet sein. Das hat den Effekt, dass mindestens eine Gegenschraubenaufnahme eines Zusatzrahmens mittels eines Befestigungsmittels, beispielsweise einer Befestigungsschraube, an einer Schraubenaufnahme des Hauptrahmens fixierbar ist und dass mindestens eine Gegenschraubenaufnahme eines weiteren Zusatzrahmens an einer Schraubenaufnahme des am Hauptrahmen angeordneten Zusatzrahmens fixierbar ist. Das Fixieren von Hauptrahmen und Zusatzrahmen mittels Befestigungsmitteln, beispielsweise Befestigungsschrauben, ermöglicht den Einsatz handelsüblicher Zukaufteile.

Weiter zweckmäßigerweise weist jeder Zusatzrahmen mindestens eine Rahmenhauptstrebe und mindestens zwei Rahmenseitenstreben auf. Die beiden Rahmenseitenstreben sind an zueinander beabstandeten freien Rahmenhauptstrebenenden der Rahmenhauptstrebe integral zusammenhängend ausgebildet, vorzugsweise stoffschlüssig und/oder formschlüssig und/oder kraftschlüssig. Zweckmäßigerweise spannen die Rahmenseitenstreben gemeinsam mit der Rahmenhauptstrebe eine Rahmenebene auf. Die beiden Rahmenseitenstreben sind ferner rechtwinkelig oder zumindest winkelig bezüglich der Rahmenhauptstrebe angeordnet und ragen von dieser weg. An jeder Rahmenseitenstrebe ist einenends eine zweite Fixiereinrichtung und anderenends eine Gegenfixiereinrichtung angeordnet. Damit ist sozusagen ein u-förmiger Zusatzrahmen beschrieben, der an einen Rahmenecken mit zweiten Fixiereinrichtung und Gegenfixiereinrichtung ausgerüstet ist.

Derartige Zusatzrahmen lassen sich relativ einfach und schnell aneinanderreihen.

Zweckmäßigerweise sind der Hauptrahmen und mindestens zwei Zusatzrahmen in einer Reihenachse berührend aneinander angeordnet, sozusagen in einer Reihe. Zweckmäßigerweise bildet dabei jedes Paar aus zweiter Fixiereinrichtung und Gegenfixiereinrichtung einer jeweiligen Rahmenseitenstrebe eine imaginäre Fixierachse. Diese kann durch den Flächen- oder Masseschwerpunkt der jeweiligen Fixiereinrichtung und der jeweiligen Gegenfixiereinrichtung mittig hindurch verlaufen. Jede Fixierachse eines Zusatzrahmens ist zweckmäßigerweise parallel bezüglich der Reihenachse ausgerichtet. Zumindest theoretisch sind auch winkelige Ausrichtungen bezüglich der Reihenachse möglich.

Weiter zweckmäßigerweise sind die Zusatzrahmen Gleichteile. Das heißt, dass die Zusatzrahmen zweckmäßigerweise zueinander gleich bzw. identisch sind.
Es sei darauf hingewiesen, dass bei der vorliegenden Erfindung der Begriff der Gleichteile diejenigen Teile bezeichnet, die eine gleichartige oder identische Funktion erfüllen. Hierzu ist es zweckmäßig, wenn die Gleichteile eine zueinander identische äußere Form aufweisen und/oder auch aus identischem Material hergestellt sind. Durch das Bereitstellen der Zusatzrahmen als Gleichteile sind diese sozusagen praktisch identisch. Beispielsweise ist deren Fertigung in der Praxis im Rahmen eines Spritzgussvorganges realisierbar. Aufdachklimaanlage mit derartigen Zusatzrahmen können besonders kostengünstig hergestellt werden, weil auf weitere, andersartig Zusatzrahmen verzichtet werden kann.

Die eingangs erwähnte Klimatisiereinrichtung der Aufdachklimaanlage weist zweckmäßigerweise mindestens einen Kondensator zum Kondensieren eines durch die Klimatisiereinrichtung zirkulierenden Kühlmittels und mindestens eine aus zumindest einem Verdampfer und zumindest einem Gebläse zusammengesetzte Verdampfereinheit zum Verdampfen des Kühlmittels auf. Im zusammengebauten Zustand der Aufdachklimaanlage kann der, insbesondere als ein separates Bauteil ausgeführte Kondensator bevorzugt an mindestens einem Zusatzrahmen und/oder am Hauptrahmen montiert und zweckmäßigerweise fluidisch mit der Verdampfereinheit verbunden sein, so dass Kühlmittel zwischen den beiden Komponenten hin und her strömen kann. Zumindest theoretisch könnte der Kondensator integral mit dem Zusatzrahmen und/oder dem Hauptrahmen ausgeführt sein oder dieselben bilden. Die Verdampfereinheit kann bevorzugt integral mit dem Hauptrahmen ausgeführt sein und/oder denselben bilden. Zweckmäßig ist hierbei eine Ausführungsform, wonach die Verdampfereinheit neben dem besagten mindestens einen Verdampfer und dem mindestens einen Gebläse noch ein dieselben vollständig einhausendes Gehäuse aufweist, das am Hauptrahmen integral angeordnet ist und den besagten mindestens einen Verdampfer und das mindestens eine Gebläse trägt. Zumindest theoretisch ist vorstellbar, dass die Verdampfereinheit, d.h. ihre Komponenten, bezüglich des Hauptrahmens separat ausgebildet und erst nachträglich an demselben montiert sind.

Zusammenfassend bleibt festzuhalten: Die vorliegende Erfindung betrifft vorzugsweise eine Aufdachklimaanlage für ein Fahrzeug, mit einer Klimatisiereinrichtung zum Klimatisieren, mit einem bezüglich der Klimatisiereinrichtung separat gestalteten Tragrahmen zum Fixieren der Klimatisiereinrichtung an einem Fahrzeugdach des Fahrzeugs. Der Tragrahmen weist seinerseits einen separaten Hauptrahmen sowie mindestens einen separaten Zusatzrahmen auf, wobei der Hauptrahmen eine erste Fixiereinrichtung zum berührenden Anordnen eines Zusatzrahmens aufweist. Wesentlich für die Erfindung ist, dass jeder Zusatzrahmen eine zweite Fixiereinrichtung zum berührenden Anordnen und Fixieren eines weiteren Zusatzrahmens aufweist, und dass jeder Zusatzrahmen eine Gegenfixiereinrichtung zum berührenden Anordnen und Fixieren des jeweiligen Zusatzrahmens am Hauptrahmen oder an einem weiteren Zusatzrahmen aufweist. Insbesondere können zwei oder mehr Zusatzrahmen als Gleichteile ausgestaltet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: in einer perspektivischen Ansicht ein bevorzugtes Ausführungsbeispiel einer erfindungsgemäßen Aufdachklimaanlage,
- Fig. 2: eine perspektivische Ansicht eines in u-Form gestalteten Zusatzrahmens der Aufdachklimaanlage aus Fig. 1, und
- Fig. 3: in einer perspektivischen Ansicht ein bevorzugtes weiteres Ausführungsbeispiel einer erfindungsgemäßen Aufdachklimaanlage.

Die Zeichnungen zeigen ein bevorzugtes Ausführungsbeispiel einer Aufdachklimaanlage 1, die zur Montage auf einem Fahrzeugdach eines nicht illustrierten Fahrzeuges vorgesehen ist und zum Klimatisieren eines Fahrzeuginnenraums des jeweiligen Fahrzeuges dient. Die Aufdachklimaanlage 1 weist eine mit dem Bezugszeichen 2 bezeichnete Klimatisiereinrichtung auf, die die eigentliche Klimatisierung übernimmt, exemplarisch ist die Klimatisiereinrichtung 2 hierzu mit nicht näher erläuterten Klimakomponenten ausgestattet, beispielsweise einem Kondensator.

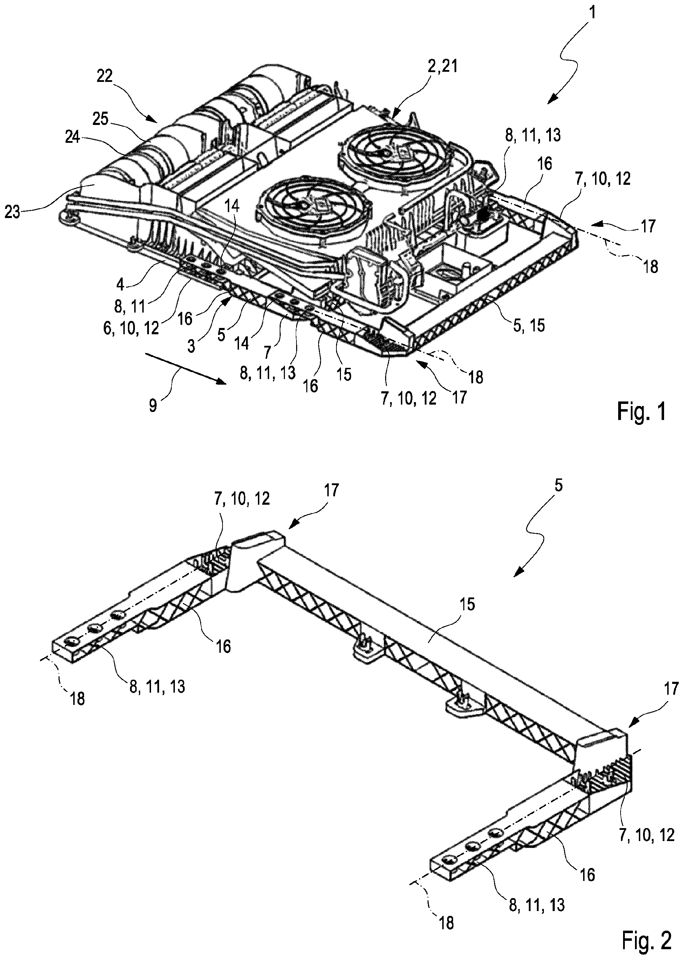

Die Fig. 1 zeigt in einer perspektivischen Ansicht ein bevorzugtes Ausführungsbeispiel einer erfindungsgemäßen Aufdachklimaanlage 1, wobei eine auf einem Tragrahmen 3 installierte Klimatisiereinrichtung 2 zu erkennen ist. Eine die Klimatisiereinrichtung 2 und den Tragrahmen 3 abdeckende Haube der Aufdachklimaanlage 1, welche im Betrieb der Aufdachklimaanlage 1 an der Klimatisiereinrichtung 2 und/oder am Tragrahmen 3 festgemacht ist, ist zwecks besserer Erkennbarkeit des Tragrahmens 3 vorliegend nicht illustriert. Der besagte Tragrahmen 3 ist dazu vorgesehen, die Klimatisiereinrichtung 2 sowie die Haube lösbar oder unlösbar mit einem Fahrzeugdach eines Fahrzeuges zu verbinden. Der Tragrahmen 3 kann zu diesem Zweck entweder lösbar mittels Befestigungsschrauben oder unlösbar mit einem Klebstoff an dem besagten Fahrzeugdach befestigt sein. Der Tragrahmen 3 weist einen separaten etwa rechteckigen Hauptrahmen 4 sowie exemplarisch zwei separate u-förmige Zusatzrahmen 5 auf, die in einer Reihenachse 9 aufeinanderfolgend gegenseitig berührend angeordnet und fixiert sind. Die Zusatzrahmen 5 sind als Gleichteile ausgeführt, so dass sie relativ kostengünstig hergestellt werden können. Während der rechteckige Hauptrahmen 4 vier integral aneinander angeordnete Hauptrahmenstreben hat, welche vollständig oder wenigstens abschnittsweise von einem Gehäuseabschnitt der Klimatisiereinrichtung 2 gebildet sein können, weist jeder Zusatzrahmen 5 eine Rahmenhauptstrebe 15 und zwei Rahmenseitenstreben 16 auf. Die beiden Rahmenseitenstreben 16 eines jeweiligen Zusatzrahmens 5 sind an zueinander beabstandeten freien Rahmenhauptstrebenenden 17 der Rahmenhauptstrebe 15 integral angeordnet, wobei die beiden Rahmenseitenstreben 16 rechtwinkelig von der Rahmenhauptstrebe 15 abstehen. Dadurch ergibt sich insgesamt jeweils eine u-förmige Gestalt für die Zusatzrahmen 5.

Die Fig. 1 zeigt weiterhin, dass die erwähnte Klimatisiereinrichtung 2 der Aufdachklimaanlage 1 exemplarisch einen Kondensator 21 zum Kondensieren eines durch die Klimatisiereinrichtung 2 zirkulierenden Kühlmittels und eine aus zumindest einem Verdampfer 24 und zumindest einem Gebläse 25 zusammengesetzte Verdampfereinheit 22 zum Verdampfen des Kühlmittels aufweist. Im in Fig. 1 illustrierten, zusammengebauten Zustand der Aufdachklimaanlage 1 ist der besagte Kondensator 21 als ein separates Bauteil ausgeführt und sowohl an dem unmittelbar am Hauptrahmen 4 angeordneten Zusatzrahmen 5 der beiden Zusatzrahmen 5 sowie am Hauptrahmen 4 montiert. Im Unterschied dazu ist die Verdampfereinheit 22 einstückig mit dem Hauptrahmen 4 ausgeführt. Zweckmäßigerweise kann dies dadurch realisiert sein, dass ein Gehäuse 23 der Verdampfereinheit 22 integral mit dem Hauptrahmen 4 ausgeführt ist, während der mindestens eine Verdampfer 24 und das mindestens eine Gebläse 25 im besagten Gehäuse 23 eingebaut sind. Um mittels der Klimatisiereinrichtung 2 eine Klimatisierung eines Innenraums eines Fahrzeugs realisieren zu können, sind der Kondensator 21 und die Verdampfereinheit 22 fluidisch miteinander gekoppelt, so dass Kühlmittel zwischen ihnen hin und her strömen kann.

Die Fig. 2 zeigt eine perspektivische Ansicht eines in u-Form gestalteten Zusatzrahmens 5 der Aufdachklimaanlage 1 aus Fig. 1. Damit Zusatzrahmen 5 in beliebiger Zahl und in Richtung der Reihenachse 9 berührend aneinanderreihbar und am Hauptrahmen 4 fixierbar sind, weist der Hauptrahmen 4 eine mit dem Bezugszeichen 6 beschriftete erste Fixiereinrichtung auf, siehe Fig. 1, die mit einer Gegenfixiereinrichtung 8 des Zusatzrahmens 5 vorzugsweise kraft und/oder formschlüssig zusammenwirkt, so dass ein Zusatzrahmen 5 berührenden am Hauptrahmen 4 anbringbar und fixierbar ist. Ferner weist jeder Zusatzrahmen 5 eine mit dem Bezugszeichen 7 bezeichnete zweite Fixiereinrichtung auf, die mit einer Gegenfixiereinrichtung 8 des Zusatzrahmens 5 vorzugsweise kraft und/oder formschlüssig zusammenwirkt, so dass es möglich ist, einen weiteren Zusatzrahmen 5 am jeweiligen Zusatzrahmen 5 berührend anzuordnen. Zweckmäßigerweise sind die ersten und die zweiten Fixiereinrichtungen 6, 7 zu den Gegenfixiereinrichtungen 8 komplementär gestaltet.

Weiter zweckmäßigerweise sind die zweiten Fixiereinrichtungen 7 und die Gegenfixiereinrichtungen 8 eines Zusatzrahmen 5 an den jeweiligen Rahmenseitenstreben 16 des Zusatzrahmens 5 angeordnet, nämlich jeweils einenends und anderenends an der jeweiligen Rahmenseitenstrebe 16. Jedes Paar aus zweiter Fixiereinrichtung 7 und Gegenfixiereinrichtung 8 einer jeweiligen Rahmenseitenstrebe 16 definieren eine imaginäre und in Fig. 2 gestrichelt eingetragene Fixierachse 18, die jeweils parallel bezüglich der Reihenachse 9 ausgerichtet sind.

Nach den Fig. 1 und 2 ist exemplarisch vorgesehen, dass die erste Fixiereinrichtung 6 des Hauptrahmens 4 und jede zweite Fixiereinrichtung 7 eines Zusatzrahmens 5 jeweils durch eine bettartige Steckeraufnahme 10 zum berührenden Aufnehmen einer Gegenfixiereinrichtungen 8 eines Zusatzrahmens 5 gebildet sind. Jede Gegenfixiereinrichtung 8 ist jeweils durch einen zur Steckeraufnahme 10 komplementär gestalteten stegartigen Stecker 11 zum berührenden Anordnen eines Zusatzrahmens 5 am Hauptrahmen 4 oder an einem weiteren Zusatzrahmen 5 gebildet. Das hat den vorteilhaften Effekt, dass mindestens ein Stecker 11 eines Zusatzrahmens 5 in eine Steckeraufnahme 10 des Hauptrahmens 4 berührend einsteckbar ist und dass mindestens ein Stecker 11 eines weiteren Zusatzrahmens 5 in eine Steckeraufnahme 10 des am Hauptrahmen 4 angeordneten Zusatzrahmens 5 berührend einsteckbar ist.

Nach den Fig. 1 und 2 ist exemplarisch zusätzlich vorgesehen, die erste Fixiereinrichtung 6 und jede zweite Fixiereinrichtung 7 jeweils durch eine Schraubenaufnahme 12 zum Aufnehmen eines Zusatzrahmens 5 zu bilden. Ferner ist zusätzlich vorgesehen, dass jede Gegenfixiereinrichtung 8 jeweils durch eine Gegenschraubenaufnahme 13 zum berührenden Anordnen eines Zusatzrahmens 5 am Hauptrahmen 4 oder an einem weiteren Zusatzrahmen 5 gebildet ist. Mindestens eine Gegenschraubenaufnahme 13 eines Zusatzrahmens 5 ist mittels einer Befestigungsschraube 14 an einer Schraubenaufnahme 12 des Hauptrahmens 4 fixiert, ferner ist mindestens eine Gegenschraubenaufnahme13 eines weiteren Zusatzrahmens 5 an einer Schraubenaufnahme 12 des am Hauptrahmen 4 angeordneten Zusatzrahmens 5 mittels einer Befestigungsschraube 14 fixiert. Dadurch ist exemplarisch eine Stecker / Schrauben - Kombination beschrieben, mittels der sich ein Hauptrahmen 4 und Zusatzrahmen 5 relativ einfach aneinander fixieren lassen.

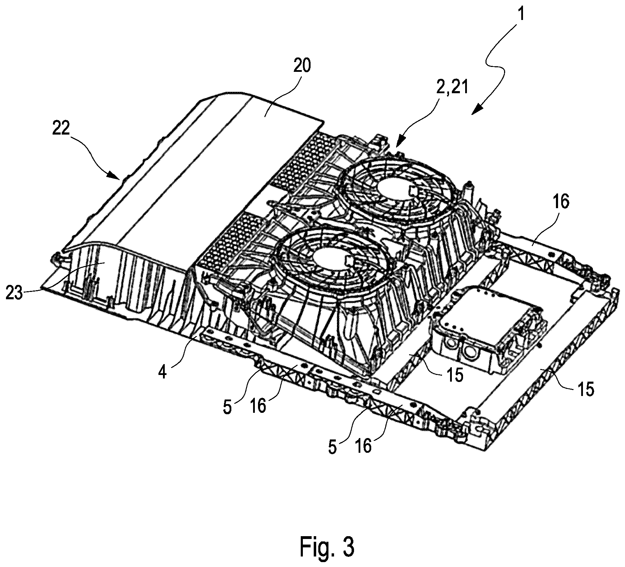

Die Fig. 3 zeigt in einer perspektivischen Ansicht ein bevorzugtes weiteres Ausführungsbeispiel einer erfindungsgemäßen Aufdachklimaanlage 1. Im Unterschied zum vorangehenden Ausführungsbeispiel ist die vorliegende Aufdachklimaanlage 1 mit einer gebogenen Haube 20 ausgerüstet, welche die Klimatisiereinrichtung 2 zumindest abschnittsweise überdeckt. Ein berührend an den Hauptrahmen 4 angesetzter, u-förmiger erster Zusatzrahmen 5, weist eine längliche Rahmenhauptstrebe 15 und zwei längliche Rahmenseitenstreben 16 auf. Die Rahmenhauptstrebe 15 und die beiden Rahmenseitenstreben 16 des ersten Zusatzrahmens 5 sind jeweils als separate Bauteile ausgeführt und berührend aneinander angeordnet, beispielsweise kann man Befestigungsschrauben oder Klemmmittel oder einen Klebstoff zu deren gegenseitigen Fixierung verwenden. An den ersten Zusatzrahmen 5 ist ein weiterer, zweiter Zusatzrahmen 5 berührend angesetzt. Der zweite Zusatzrahmen 5 ist identisch zum ersten Zusatzrahmen 5 ausgeführt, d.h. es handelt sich um ein Gleichteil, welches ebenfalls über eine längliche Rahmenhauptstrebe 15 und zwei längliche Rahmenseitenstreben 16 verfügt. Durch die Gestaltung und Anordnung der Zusatzrahmen 5 ist zwischen dem Hauptrahmen 4 und dem ersten Zusatzrahmen 5 sowie zwischen dem ersten Zusatzrahmen 5 und dem zweiten Zusatzrahmen 5 freier Installationsraum für Komponenten der Klimatisiereinrichtung 2 geschaffen. Man kann sich vorstellen, dass die Komponenten der Klimatisiereinrichtung 2 in den freien Installationsraum eingefügt und an den jeweiligen Zusatzrahmen 5 bzw. dem Hauptrahmen 4 mittels Befestigungsschrauben fixiert oder mittels einer Klemmung festgeklemmt sind. Natürlich ist es auch denkbar, die Komponenten der Klimatisiereinrichtung 2 mithilfe eines Klebstoffes an einen jeweiligen Zusatzrahmen 5 bzw. den Hauptrahmen 4 unlösbar festzukleben.

## Patentansprüche

1. Aufdachklimaanlage für Fahrzeuge,
- mit einer Klimatisiereinrichtung (2) zum Klimatisieren,
- mit einem bezüglich der Klimatisiereinrichtung (2) separat gestalteten Tragrahmen (3) zum Fixieren der Klimatisiereinrichtung (2) an einem Fahrzeugdach,
- wobei der Tragrahmen (3) einen separaten Hauptrahmen (4) sowie mindestens einen separaten Zusatzrahmen (5) aufweist,
- wobei der Hauptrahmen (4) eine erste Fixiereinrichtung (6) zum berührenden Anordnen eines Zusatzrahmens (5) aufweist,
**dadurch gekennzeichnet,**
- **dass** jeder Zusatzrahmen (5) eine zweite Fixiereinrichtung (7) zum berührenden Anordnen eines weiteren Zusatzrahmens (5) aufweist, und
- **dass** jeder Zusatzrahmen (5) eine Gegenfixiereinrichtung (8) zum berührenden Anordnen des jeweiligen Zusatzrahmens (5) am Hauptrahmen (4) oder an einem weiteren Zusatzrahmen (5) aufweist.

2. Vorrichtung nach Anspruch 1,
**dadurch gekennzeichnet, dass**
- die erste Fixiereinrichtung (6) und die zweiten Fixiereinrichtungen (7) jeweils durch Fixier-Gleichteile gebildet sind, und/oder
- dass die Gegenfixiereinrichtungen (8) jeweils durch Gegenfixier-Gleichteile gebildet sind.

3. Vorrichtung nach Anspruch 1 oder 2,
**dadurch gekennzeichnet, dass**
die erste Fixiereinrichtung (6) und die zweiten Fixiereinrichtungen (7) jeweils komplementär zu den Gegenfixiereinrichtungen (8) gestalteten sind, so dass Zusatzrahmen (5) in beliebiger Zahl und in einer Reihenachse (9) berührend aneinanderreihbar und am Hauptrahmen (4) fixierbar sind.

4. Vorrichtung nach einem der vorhergehenden Ansprüche,
**dadurch gekennzeichnet, dass**
die erste Fixiereinrichtung (6) stoffschlüssig und/oder formschlüssig und/oder kraftschlüssig mit einer Gegenfixiereinrichtung (8) zusammenwirkt.

5. Vorrichtung nach einem der vorhergehenden Ansprüche,
**dadurch gekennzeichnet, dass**
mindestens eine zweite Fixiereinrichtung (7) stoffschlüssig und/oder formschlüssig und/oder kraftschlüssig mit einer Gegenfixiereinrichtung (8) zusammenwirkt.

6. Vorrichtung nach einem der vorhergehenden Ansprüche,
**dadurch gekennzeichnet,**
- **dass** die erste Fixiereinrichtung (6) an einer Gegenfixiereinrichtung (8) durch stecken oder schrauben fixiert ist, und/oder
- **dass** mindestens eine zweite Fixiereinrichtung (7) an einer Gegenfixiereinrichtung (8) durch stecken oder schrauben fixiert ist.

7. Vorrichtung nach einem der vorhergehenden Ansprüche,
**dadurch gekennzeichnet, dass**
die erste Fixiereinrichtung (6) und jede zweite Fixiereinrichtung (7) jeweils durch eine bettartige Steckeraufnahme (10) zum berührenden Aufnehmen eines Zusatzrahmens (5) gebildet sind und dass jede Gegenfixiereinrichtung (8) jeweils durch einen stegartigen Stecker (11) zum berührenden Anordnen eines Zusatzrahmens (5) am Hauptrahmen (4) oder an einem weiteren Zusatzrahmen (5) gebildet ist, wobei mindestens ein Stecker (11) eines Zusatzrahmens (5) in eine Steckeraufnahme (10) des Hauptrahmens (4) berührend eingesteckt ist und wobei mindestens ein Stecker (11) eines weiteren Zusatzrahmens (5) in eine Steckeraufnahme (10) des am Hauptrahmen (4) angeordneten Zusatzrahmens (5) berührend eingesteckt ist.

8. Vorrichtung nach einem der vorhergehenden Ansprüche,
**dadurch gekennzeichnet, dass**
die erste Fixiereinrichtung (6) und jede zweite Fixiereinrichtung (7) jeweils durch eine Schraubenaufnahme (12) zum Aufnehmen eines Zusatzrahmens (5) gebildet sind und dass jede Gegenfixiereinrichtung (8) jeweils durch eine Gegenschraubenaufnahme (13) zum berührenden Anordnen eines Zusatzrahmens (5) am Hauptrahmen (4) oder an einem weiteren Zusatzrahmen (5) gebildet ist, wobei mindestens eine Gegenschraubenaufnahme (13) eines Zusatzrahmens (5) mittels einer Befestigungsschraube (14) an einer Schraubenaufnahme (12) des Hauptrahmens (4) fixiert ist und wobei mindestens eine Gegenschraubenaufnahme (13) eines weiteren Zusatzrahmens (5) an einer Schraubenaufnahme (12) des am Hauptrahmen (4) angeordneten Zusatzrahmens (5) mittels einer Befestigungsschraube (14) fixiert ist.

9. Vorrichtung nach einem der vorhergehenden Ansprüche,
**dadurch gekennzeichnet,**
**dass** jeder Zusatzrahmen (5) eine Rahmenhauptstrebe (15) und zwei Rahmenseitenstreben (16) aufweist, wobei die beiden Rahmenseitenstreben (16) an zueinander beabstandeten freien Rahmenhauptstrebenenden (17) der Rahmenhauptstrebe (15) integral angeordnet sind, wobei die beiden Rahmenseitenstreben (16) ferner rechtwinkelig von der Rahmenhauptstrebe (15) abstehen, wobei an jeder Rahmenseitenstrebe (16) einenends eine zweite Fixiereinrichtung (7) und anderenends eine Gegenfixiereinrichtung (8) angeordnet ist.

10. Vorrichtung nach Anspruch 9,
**dadurch gekennzeichnet, dass**
der Hauptrahmen (4) und mindestens zwei Zusatzrahmen (5) in einer Reihenachse (9) berührend aneinander angeordnet sind, wobei jedes Paar aus zweiter Fixiereinrichtung (7) und Gegenfixiereinrichtung (8) einer jeweiligen Rahmenseitenstrebe (16) eine Fixierachse (18) bildet, wobei jede Fixierachse (18) eines Zusatzrahmens (5) parallel bezüglich der Reihenachse (9) ausgerichtet ist.

11. Vorrichtung nach einem der vorhergehenden Ansprüche,
**dadurch gekennzeichnet,**
**dass** die Zusatzrahmen (5) Gleichteile sind.
